# EUROPEAN PATENT APPLICATION

(11) **EP 1 469 287 A2**
(43) Date of publication of application: **20.10.2004**
(21) Application number: 04251552.8
(22) Date of filing: 18.03.2004
(51) Int. Cl.: G01C 21/36, H04Q 7/38

(54) **Device for map information processing and position display**

(30) Priority: 18.04.2003 JP 2003114893
(71) Applicant: Pioneer Corporation, Tokyo 153-8654 (JP); Increment P Corporation, Tokyo 153-8665 (JP)
(72) Inventor: Yoshihashi, Makoto c/o Increment P Corporation, Tokyo 153-8665 (JP)
(74) Representative: Haley, Stephen

(57) **Abstract**

A terminal unit (400) acquires navigation electric wave, generates an assumed coordinate information, and transmits the information to a position information processing device (320) over a network (200), so that the position information processing device (320) generates a position information on the current position of the terminal unit (400) and an accuracy information on a positioning accuracy. The terminal unit (400) acquires the position information and the accuracy information from the position information processing device (320) and transmits them to a server unit (500) over the network (200) with information on a display area where a map is displayed. The server unit (500) sets a scale rate of the map based on the accuracy information and calculates a circular area where the terminal unit (400) may be located. The server unit (500) reads a map information of the circular area, the diameter of which is 80% of the short dimension of the display area, and transmits the information to the terminal unit (400) for displaying it. An error area can be displayed in detail.

## Description

The present invention relates to a map information processing device, its system, its method, its program, a recording medium storing the program, a position information display device, its method, its program and a recording medium storing the program, for processing a map information on displaying a current position overlaid on a map on a display.

A communication navigation system conventionally known is that acquires a map information stored in a sever unit via communication by using a mobile communication terminal such as an in-vehicle or portable navigation device, a PDA (Personal Digital Assistant), a mobile phone, a PHS (Personal Handyphone System) and a portable personal computer so as to search information on a current position and a route to a destination, and to retrieve information on a shop nearby. While such communication navigation system entirely managing a large amount of a map information with the server unit, the mobile communication terminal does not need a high-capacity storage that stores the map information, thereby simplifying its structure, reducing its size and weight, and readily providing the latest map information. In the communication navigation system, there is a well-known arrangement to display a map information where a current position is overlaid on a displayed map with its scale being set based on accuracy of the information on the acquired current position, so that the actual current position is located within the displayed map when displaying the current position with the map information. For instance, see prior art 1; JP2002-351767A, the left column on page 4 to the left column on page 7.

According to the prior art 1, when a user requests positioning with a mobile wireless terminal unit, positioning is performed by a positioning server unit based on navigation electric wave sent from a GPS satellite to acquire an assist information. When acquiring the assist information from the positioning server unit, the mobile wireless terminal unit acquires navigation electric wave based on the assist information, processes the wave and transmits the processed result to the positioning server. The positioning server unit calculates the position of the mobile wireless terminal unit based on the processed result to generate a point information, further generates an accuracy information on a positioning accuracy based on the position information and the processed result, and sets the scale of the map information. According to the prior art 1, the map information based on the set scale is transmitted to the mobile wireless terminal unit from a map server storing the map information.

Though the prior art 1 sets the scale of the map information corresponding to the positioning accuracy and transmits the map information with the set scale to the mobile wireless terminal unit, a user might be difficult to determine where he/she is on the displayed map in the case that the displayed map is not corresponding to the area where the terminal unit is actually located on the displayed map with the set scale. Specifically, when the area where the terminal unit is actually located is too small relative to the displayed map, the scale of the displayed map might be too large to recognize sufficient information from the map, therefore it is difficult to determine the self-position of the terminal unit. On the other hand, when the area where the terminal unit is actually located is too large relative to the displayed map, i.e., when the displayed map lacks a part of the located area, the displayed map might be different from the actual environment, thereby hardly determining the self-position.

An object of the present invention is to provide a map information processing device, its system, its method, its program, a recording medium storing the program, a position information display device, its method, its program and a recording medium storing the program, for appropriately displaying a current position on a map.

A map information processing device for processing a map information on a map displayed on a display to provide a current position overlaid on the map according to an aspect of the present invention, includes: a storage for storing the map information; a position information acquiring section for acquiring a position information on the current position generated by positioning; an accuracy information acquiring section for acquiring an accuracy information on a positioning accuracy of the current position; a display area information acquiring section for acquiring a display area information on a display area in which the map is displayed on the display; an error area computer for calculating an error area of the current position based on the position information and the accuracy information; and a map information processor for acquiring the map information with a scale area where the maximum dimension of the error area corresponds to the minimum dimension of the display area from the storage.

A position information display device according to another aspect of the present invention, includes: a display for displaying a map; a display controller for displaying the map at a predetermined display area on the display; a position information acquiring section for acquiring a position information on a current position generated by a positioning section that locates the current position; an accuracy information acquiring section for acquiring an accuracy information on a positioning accuracy generated by the positioning section; and a map information acquisition request section for outputting a request to calculate an error area of the current position based on the position information and the accuracy information, to read a map information on a map with a scale area where the maximum dimension of the error area corresponds to the minimum dimension of the display area by a device that stores the map information, and to acquire the map information in a manner capable of being displayed by the display controller.

A map information processing system according to a still another aspect of the present invention, includes: the above map information processing device; and a terminal unit connected with the map information processing device in a manner capable of transmitting/receiving information, the terminal unit including the display for displaying the map information acquired by the map information processing device.

A map information processing system according to a further aspect of the present invention, includes: the above position information display device; and the above map information processing device, the map information processing device being connected with the map information display device in a manner capable of transmitting/receiving information, acquiring the map information based on the request output from the position information display device, and storing the map information to be outputted to the map information to the position information display device.

A map information processing system according to a still further aspect of the present invention, displays a current position of a terminal unit that is overlaid on a map on a display of the terminal unit, the terminal unit being connected with a server unit that stores a map information on the map in a manner capable of transmitting/receiving information, in which the terminal unit acquires a position information on the current position generated by positioning and an accuracy information on a positioning accuracy of the current position and transmits the position information and accuracy information to the server unit, and in which the server unit calculates an error area of the current position based on the position information and the accuracy information transmitted from the terminal unit, acquires the map information with a scale area where the maximum dimension of the error area corresponds to the minimum dimension of a display area for displaying the map on the display of the terminal unit, and transmits the map information to the terminal unit.

A map information processing method according to a yet still further aspect of the present invention, by a computer, for processing a map information on a map displayed on a display to provide guidance for a current position overlaid on the map, the method includes the steps of: calculating an error area of the current position based on a position information on the current position and an accuracy information on a positioning accuracy of the current position; and acquiring the map information with a scale rate where the maximum dimension of the error are corresponds to the minimum dimension of a display area for displaying the map on the display, from a storage that stores the map information.

A map information processing method according to an even another aspect of the present invention, by a computer, for displaying a map where a current position of a terminal display unit overlaid on the map on a display of a terminal unit connected with a server unit that stores a map information on the map in a manner capable of transmitting/receiving information, the method includes the steps of: at the terminal unit, acquiring a position information on the current position generated by positioning and an accuracy information on a positioning accuracy of the current position and transmitting the position information and the accuracy information to the server unit; at the server unit, calculating an error area of the current position based on the position information and the accuracy information transmitted from the terminal unit; and at the server unit, acquiring the map information with a scale area where the maximum dimension of the error area corresponds to the minimum dimension of a display area for displaying the map on a display of the terminal unit and transmitting the map information to the terminal unit so as to display on the display.

A position information display method according to an even another aspect of the present invention, by a computer, for displaying a map to provide a current position overlaid on the map, the method includes the steps of: acquiring a position information and an accuracy information on the current position generated by a positioning section that positions the current position; outputting the position information and the accuracy information; calculating an error area of the current position based on the position information and the accuracy information; and reading and acquiring a map information on a map with a scale area where the maximum dimension of the error area corresponds to the minimum dimension of a display area for displaying the map on the display at a device that stores a map information in a manner capable of displaying the map information on the display.

A map information processing program according to an even another aspect of the present invention executes the above map information processing method by the computer.

A position information display program according to an even another aspect of the present invention executes the above position information display method by the computer.

A recording medium according to an even another aspect of the present invention stores the above map information processing program in a manner readable by the computer.

A recording medium according to an even another aspect of the present invention stores the above position information display program in a manner readable by the computer.

In the Drawings;
Fig. 1 is a block diagram schematically showing structure of a navigation system according to an embodiment of the present invention;
Fig. 2 is a block diagram schematically showing structure of a terminal unit according to the embodiment;
Fig. 3 is a block diagram schematically showing structure of a server unit according to the embodiment;
Fig. 4 is a conceptual diagram schematically showing a table structure of a display data of a map information according to the embodiment;
Fig. 5 is a conceptual diagram schematically showing a table structure of a matching data in the map information according to the embodiment;
Fig. 6A is a conceptual diagram schematically showing structure of the layered display data displayed at a display area according to the embodiment, the screen-displayed map information having a detailed scale rate corresponding to the level 3, the positioning accuracy of which is high;
Fig. 6B is a conceptual diagram schematically showing structure of the layered display data displayed at a display area according to the embodiment, the screen-displayed map information having a scale rate corresponding to the level 2, the positioning accuracy of which is medium;
Fig. 6C is a conceptual diagram schematically showing structure of the layered display data displayed at a display area according to the embodiment, the screen-displayed map information having a rough scale rate corresponding to the level 1, the positioning accuracy of which is low;
Fig. 7 is an explanatory drawing showing a relation between the display area and an error area calculated by a map output section according to the embodiment;
Fig. 8 is a flowchart showing operation for displaying the current position of the terminal unit of the navigation system according to the embodiment;
Fig. 9 is a conceptual diagram showing a screen-displayed form to indicate that a map cannot be displayed according to the embodiment;
Fig. 10 is a flowchart showing operation for acquiring a map information according to the embodiment;
Fig. 11 is a conceptual diagram showing a map information to be displayed at the display area according to the embodiment;
Fig. 12 is a conceptual diagram showing a screen display of a map display form for displaying a map information according to the embodiment;
Fig. 13 is a conceptual diagram showing a map information to be displayed at the display area when a display mode is switched according to the embodiment; and
Fig. 14 is a conceptual diagram showing a screen display of a retrieval execution form to search information on parking according to the embodiment.

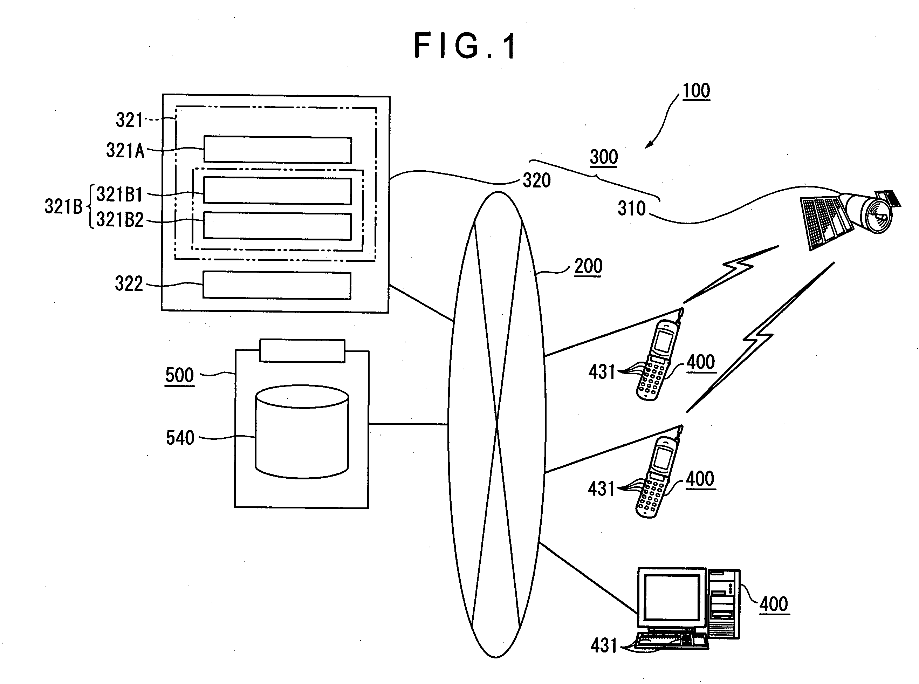

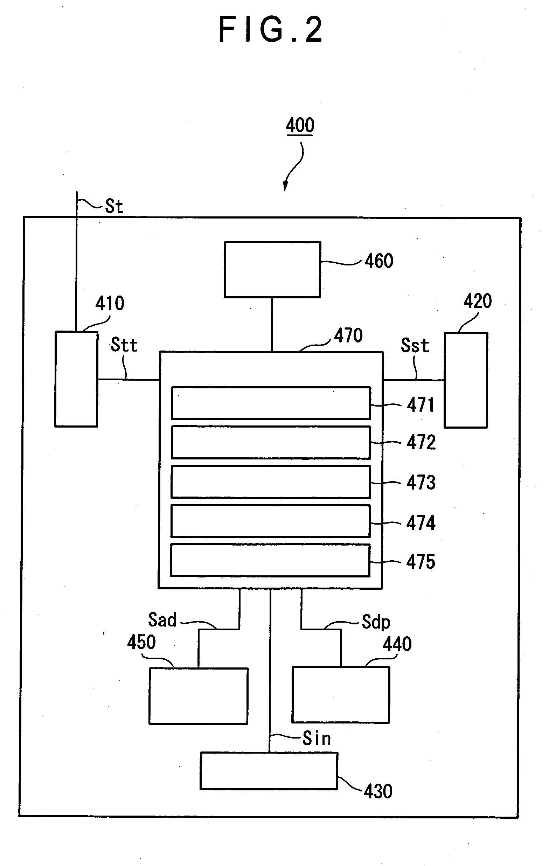

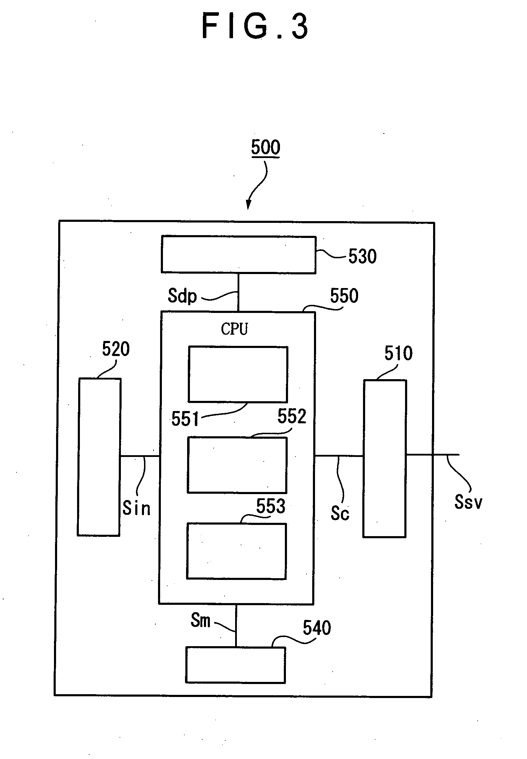

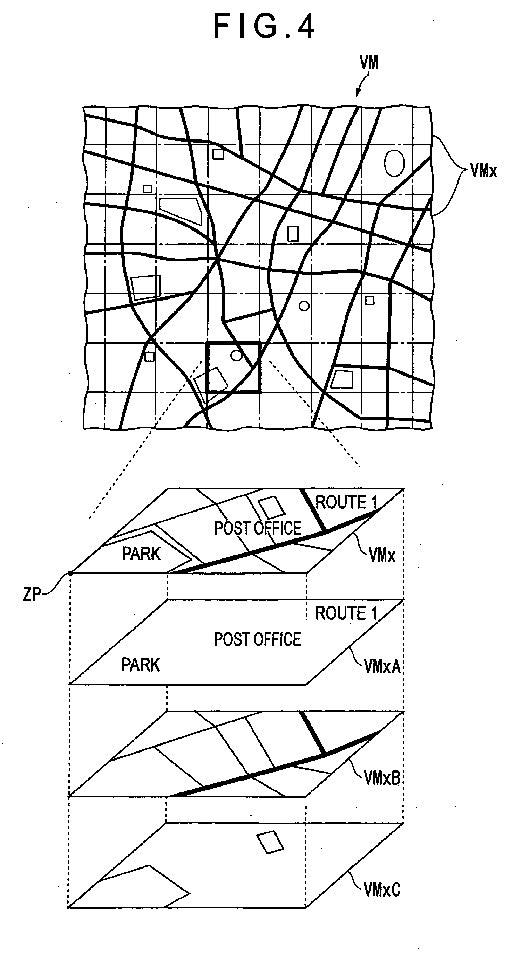

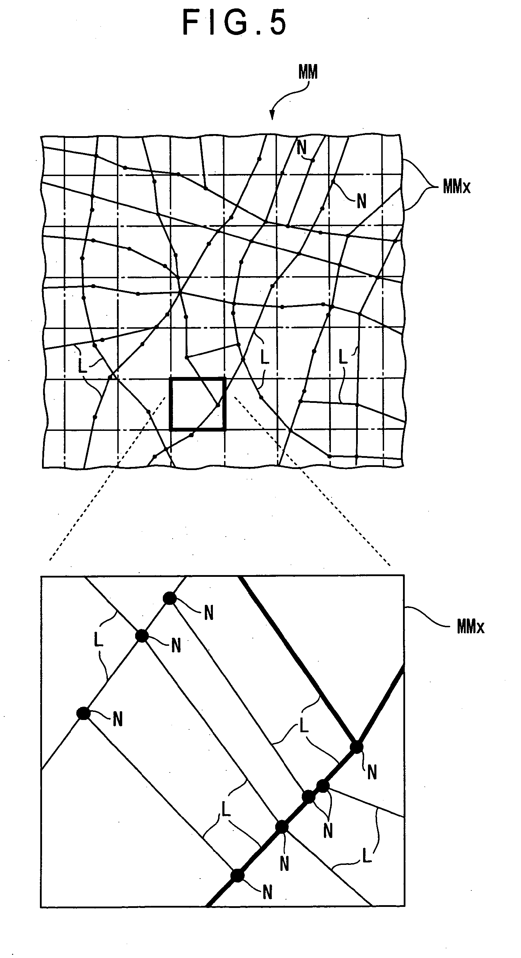

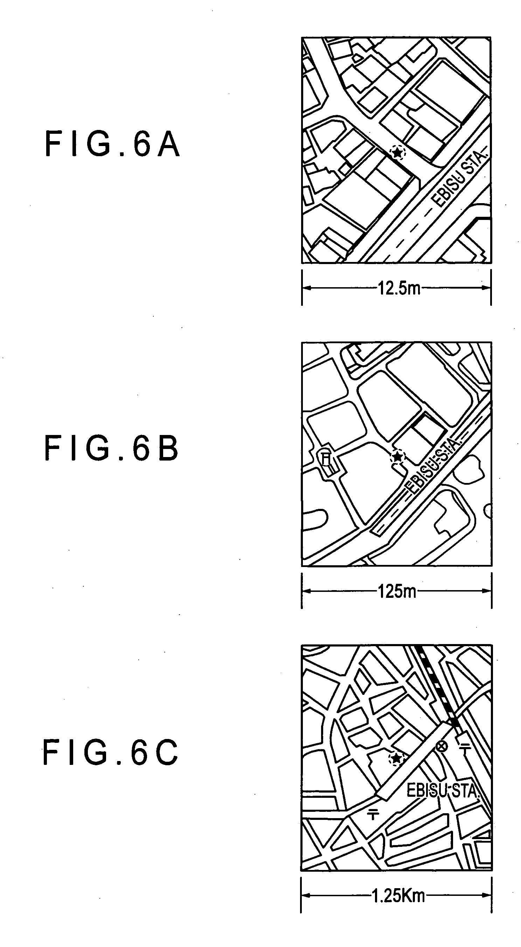

An embodiment of the present invention will be described below with reference to attached drawings. In the embodiment, a communication navigation system is explained as an example of a map information processing system of the present invention. Fig. 1 is a block diagram schematically showing structure of the navigation system according to the embodiment. Fig. 2 is a block diagram schematically showing structure of a terminal unit. Fig. 3 is a block diagram schematically showing structure of a server unit. Fig. 4 is a conceptual diagram schematically showing a table structure of a display data of a map information. Fig. 5 is a conceptual diagram schematically showing a table structure of a matching data of a map information. Figs. 6A to 6C are conceptual diagrams each schematically showing structure of the layered display data displayed at a display area, each display data having different scale rate corresponding to a positioning accuracy of the map information.

### [Structure of Navigation System]

In Fig. 1, a reference numeral 100 denotes the communication navigation system as the map information processing system. The navigation system 100 provides guidance corresponding to the current position of a movable body such as a vehicle, an aircraft and a ship, or provides the current position by way of a map display. The navigation system 100 has a network 200, a position information processing system 300, a terminal unit 400 (a position information display) that can function as the map information processing device, and a server unit 500 that can function as the map information processing device.

The position information processing system 300, the terminal unit 400 and the server unit 500 are connected to the network 200. The network 200 connects the position information processing system 300 with the terminal unit 400; and also the terminal unit 400 with the server unit 500, in a manner capable of transmitting/receiving information. The network 200 may be Internet based on a general-purpose protocol such as TCP/IP protocol, an intranet, a LAN (Local Area Network), a network such as a communication network or a broadcasting network where a plurality of base stations constructs the network in a manner capable of transmitting/receiving information by way of a radio medium, or the radio medium itself that realizes direct information exchange among the position information processing system 300, the terminal unit 400 and the server unit 500. The radio medium may be applied to any of electric waves, light beams, acoustic waves and electromagnetic waves.

The position information processing system 300 has a GPS satellite 310 (artificial satellite) and a position information processing device 320. The GPS satellite 310 outputs navigation electric wave, which is a radio medium constituting a part of the network. The position information processing device 320 is, for example, a computer system provided in a base station of the communication network constituting a part of the network 200, the position information processing device 320 being connected with the network 200 over the communication network of the network 200 so as to be capable of transmitting/receiving information with the terminal unit 400.

The position information processing device 320 has a base computer 321 that is a program running on an OS (Operating System) for controlling the whole operation of the position information processing device 320. The base computer 321 has a base transceiver 321A that transmits/receives various information to/from the terminal unit 400 over the communication network of the network 200. The base computer 321 further has a positioning section 321B provided with a position information generator 321B1 and an accuracy information generator 321B2. The position information generator 321B1 generates a position information according to latitude and longitude for the current position of the terminal unit 400, based on an assumed coordinate information that is certain information acquired from the terminal unit 400 over the communication network of the network 200. The accuracy information generator 321B2 generates an accuracy information on a positioning accuracy of the position information generated by the position information generator 321B1. The accuracy information means, for instance, a positioning accuracy represented with plural levels. Specifically, as the positioning accuracy becomes higher, a value representing the level becomes greater by setting. Though this embodiment is described with three levels of 1 to 3, the number of the levels is not restricted to three. The positioning section 321B outputs the position information and the accuracy information to the base transceiver 321A and transmits the information to the terminal unit 400 that have sent the assumed coordinate information, over the communication network of the network 200.

Note that the position information and the accuracy information, of which detail is described later, are transmitted to a target terminal unit 400 by receiving a unique terminal information as well as the assumed coordinate information from the terminal unit 400 and designating the target terminal unit 400 based on the unique terminal information. At the transmission, the base computer 321 also transmits a connection information for connecting the terminal unit 400 with the server unit 500 in a manner capable of transmitting/receiving information over the network 200, as well as sending the position information and the accuracy information.

The position information processing device 320 further includes a base storage 322 that stores a user information on a user using the communication network and owning the terminal unit 400. The user information stored in the base storage 322 includes: a personal information such as one's name and address; ones' phone number (line number) for transmitting information to the terminal unit 400, and Internet address information; and the unique terminal information, e.g., a model information, for designating the terminal unit 400. The base storage 322 has a table structure that stores the above information as one record.

The terminal unit 400 may be, for example, a mobile phone, a PHS (Personal Handyphone System), a PDA (Personal Digital Assistant), a portable personal computer, an in-vehicle navigation device installed on a vehicle as a movable body, and a portable navigation device. The terminal unit 400 acquires the position information and the accuracy information of the terminal unit 400 from the position information processing system 300 over the network 200, and also acquires a map information (described later) from the server unit 500 to provide the current position based on the map information by displaying it. The terminal unit 400, as shown in Fig. 2, has a transceiver 410 (a terminal communication section), a sensor section 420 (a positioning section), a terminal input section 430 (a terminal operation section), a terminal display 440 (a terminal display section), a voice output section 450, a memory 460 (a terminal storage) and a processor 470 (a processing section).

The transceiver 410 is connected to the position information processing system 300 and the server unit 500 over the network 200, and also connected to the processor 470. The transceiver 410 can receive a terminal signal St from the position information processing system 300 and the server unit 500 over the network 200. When acquiring the terminal signal St, the transceiver 310 performs a preset input interface processing so as to output the terminal signal St as a processing terminal signal Stt to the processor. The transceiver 410 can also retrieve the processing terminal signal Stt from the processor 470. When acquiring the processing terminal signal Stt to be input, the transceiver 410 performs a preset output interface processing so as to send the processing terminal signal Stt as the terminal signal St to the position information processing system 300 and the server unit 500 over the network 200.

The sensor section 420, for example, includes a GPS (Global Positioning System) receiver (not shown). The GPS receiver receives navigation electric wave that is a radio medium output from the GPS satellite 310 (the artificial satellite) shown in Fig. 1 by a GPS antenna (not shown). The GPS receiver processes the received navigation electric wave into a GPS data, and then outputs it to the processor 470. Note that the sensor section 420, just like the one in an in-vehicle navigation device, may include various sensors (not shown) such as a speed sensor, a direction sensor and an acceleration sensor for detecting the speed and the driving direction etc. of the vehicle, and output the results to the processor 470 as a sensor data.

The terminal input section 430, which may be a keyboard, a mouse or the like, has various operation buttons 431 for an input operation. The input operation with the operation buttons 431 includes, for instance, configuration for setting operational preferences for the terminal unit 400. Specifically, the operation buttons 431 enables: an execution order of a communication operation, i.e., a communication request information as an acquisition request information for acquiring various information over the network 200; setting of information contents to be acquired and an acquisition criteria; and retrieval of various information. According to the input operation for the configuration, the terminal input section 430 outputs a predetermined signal Sin to the processor 470 so as to apply the configuration. Note that in the terminal input section 430, without limiting to the operation buttons 431, a touch panel provided on the terminal display 440 or voice may be used for the input operation to set various configurations at the processor 470.

The terminal display 440 is controlled by the processor 470 to display a signal Sdp for image data sent from the processor 470 on a screen. The image data may includes the one for various information transmitted from the position information processing system 300, the one representing the below-described map information or the retrieval information transmitted from the server unit 500, a TV image data received by a TV receiver (not shown), the one stored in a recording medium such as an optical disk or a magnetic disk and read by a drive, i.e. an external device, and the one stored in the memory 460. The terminal display 440, to be specific, may be applied to various displays such as a liquid crystal panel, an organic EL (electroluminescence) panel, a PDP (Plasma Display Panel) and a CRT (Cathode-Ray Tube) etc.

The voice output section 450 has a voicing section such as a speaker (not shown). The voice output section 450 is controlled by the processor 470 to output various signals Sad, which may be voice data sent from the processor 470, in voice form by using the voicing section. Information output in voice form is provided to a passenger such as a driver of the vehicle for navigating the vehicle. The information may be communication contents transmitted/received over the communication network, and the driving direction and the driving status of the vehicle. The voicing section can appropriately output, for example, a TV voice data received by the TV receiver and a voice data recorded in an optical disk or a magnetic disk. The voice output section 450 is not restricted to this arrangement with the voicing section, but may be an arrangement using a sounding section equipped on the vehicle instead.

The memory 460 appropriately stores various information acquired over the network 200, the configuration input by the terminal input section 430, music data, image data and the like. The memory 460 also stores various programs running on an OS (Operating System) for controlling the whole operation of the terminal unit 400. The memory 460 further stores, for example, a line number of a communication line such as an ID (identification) number or phone number, a unique terminal information such as a password for designating the target terminal unit 400, and a personal information on the user such as one's name. Note that the memory 460 may have a drive or a driver storing data in an IC (Integrated Circuit) card, a HD (Hard Disk) or an optical disk in a readable form.

The processor 470 has various input/output ports (not shown) including, for example, a communication port connected to the transceiver 410, a GPS receiving port connected to the GPS receiver, a key input port connected to the terminal input section 430, a display control port connected to the terminal display 440, a voice control port connected to the voice output section 450 and a memory port connected to the memory 460. If various sensors are provided as the sensor section 420, the processor 470 also has sensor ports connected to the various sensors. The processor 470 includes various programs as shown in Fig. 2 such as an assumed coordinate information acquiring section 471, a position and accuracy information acquiring section 472 that functions as the position information acquiring section and the accuracy information acquiring section, a map information acquiring section 473, a display controller 474 and a information retriever 475. The processor 470 further includes an internal clock not shown that enables to acquire a time information on the current date and time.

The assumed coordinate information acquiring section 471, when recognizing the certain input operation by the terminal input section 430, operates the sensor section 420 to acquire navigation electric wave sent from the GPS satellite 310 so that acquires the GPS data. Note that when this arrangement includes various sensors as the sensor section 420, the sensor data is also acquired from the sensors. The assumed coordinate information acquiring section 471 generates an assumed coordinate information based on the acquired GPS data. The assumed coordinate information may be information for determining: whether navigation electric wave is acquired or not; how many of the GPS satellites 310 could acquire navigation electric wave; reception strength of navigation electric wave; an assumed coordinate value calculated by the assumed coordinate information acquiring section 471. Note that when this arrangement includes the various sensors as the sensor section 420, the assumed coordinate information may include information for determining: whether the sensor data could be acquired or not; and whether the sensor data has been used as well as the GPS data as the calculated assumed coordinate value. The assumed coordinate information acquiring section 471 outputs the acquired assumed coordinate information to the position and accuracy information acquiring section 472.

The position and accuracy information acquiring section 472 acquires the assumed coordinate information output from the assumed coordinate information acquiring section 471, processes the assumed coordinate information, for instance, converts the protocols of various information constituting the assumed coordinate information in a predetermined order, and operates the transceiver 410 so as to transmit the assumed coordinate information to the position information processing device 320 of the position information processing system 300. When transmitting, the transceiver 410 also transmits, for instance, the unique terminal information for designating the terminal unit 400 together with. The position and accuracy information acquiring section 472 acquires the connection information as well as the position information and the accuracy information transmitted from the position information processing device 320 over the network 200. The position and accuracy information acquiring section 472 operates the transceiver 410 based on the connection information so as to connect to the server unit 500 over the network 200 in a manner capable of transmitting/receiving information, and transmits the position information and the accuracy information previously acquired to the server unit 500. When transmitting the position information and the accuracy information, the transceiver 410 transmits the unique terminal information together.

The map information acquiring section 473 acquires the map information transmitted from the server unit 500 over the network. The map information acquiring section 473 outputs the acquired map information to the memory 460 for storing the map information, and outputs it to the display controller 474.

The display controller 474, based on various forms previously stored in the memory 460, appropriately controls the terminal display 440 to display various information such as the map information on the terminal display 440.

The information retriever 475 acquires various information based on the certain input operation by the terminal input section 430. Specifically, the information retriever 475 acquires, for instance, a shop information on a shop, and a result for a route search to the shop based on the map information from the server unit 500, or music information and image information by connecting to various web site. The certain input operation by the terminal input section 430 uses the various forms previously stored in the memory 460 and displayed on the terminal display 440 to set execution of retrieving information and its retrieving criteria upon the input operation according to the forms, and operates the transceiver 410 to output the setting over the network 200.

The server unit 500 can transmit/receive information to/from the terminal unit 400 over the network 200. In addition, the server unit 500 can acquire various information over the network 200 from servers (not shown) that are installed in various public offices including the Meteorological Agency and the National Police Agency, private organizations, the Vehicle Information and Communication System (VICS) and business enterprises. The information acquired by the server unit 500 includes a travel information, i.e., various travel related information that is utilized during the travel of the vehicle such as a weather information, a traffic information including a traffic jam, a traffic accident, a road construction and a traffic regulation, and a shop information including a gasoline station and a restaurant etc. As shown in Fig. 3, the server unit 500 has an interface 510, an input section 520, a display 530, a storage 540, a CPU (Central Processing Unit) 550 as a computer and the like.

The interface 510 performs the preset input interface processing on a server signal Ssv input over the network 200 so as to output the server signal Ssv to the CPU 550 as the processing server signal Sc. When the CPU 550 inputs the processing server signal Sc to be sent to the terminal unit 400, the interface 510 performs the preset output interface processing on the input processing server signal Sc so as to output the processing server signal Sc to the terminal unit 400 over the network 200 as a server signal Ssv. Note that the server signal Ssv can be appropriately output only to a target terminal unit 400 based on the information indicated in the processing server signal Sc.

The input section 520, which may be a keyboard, a mouse or the like, has various operation buttons (not shown) for an input operation, just like the terminal input section 430. The input operation with the operation buttons includes configuration for setting operational preferences for the server unit 500, configuration for setting information to be stored in the storage 540, configuration for updating information stored in the storage 540 and the like. When the configuration is set, the input section 520 outputs a signal Sin corresponding to the configuration to the CPU 550 so as to apply the configuration. Note that in the input section 520, without limiting to the operation buttons, a touch panel provided on the display 530 or voice may be used for the input operation to set various configurations, just like the terminal unit 400.

The display 530, just like the terminal display 440, is controlled by the CPU 550 to display a signal Sdp for image data sent from the CPU 550 on a screen. The image data may be acquired from the storage 540 or the respective servers.

The storage 540 stores various information and the map information received from the terminal unit 400 or an external server etc. in a readable form. Specifically, the storage 540 has a storage medium (not shown) for storing information, a drive or a driver (both not shown) as a reading section for storing information in the storage medium in a readable manner. Note that the storage 540 may also store various information set by the input operation with the input section 520. The storage 540 also stores various programs running on an OS (Operating System) for controlling the whole operation of the server unit 500.

The map information as information includes a display data VM, i.e., so-called POI (Point Of Interest) data as shown in Fig. 4, a matching data MM as shown in Fig. 5, a map data for travel route search and the like.

As shown in Fig. 4, the display data VM contains a plurality of display mesh information VMx, for instance, each of the display mesh information VMx has its unique number. More specifically, the display data VM is divided into the plurality of display mesh information VMx each of which associates with a partial area, the plurality of display mesh information VMx continuously arranged in a matrix form. The display mesh information VMx is further divided into a plurality of downscale display mesh information VMx each of witch associates with a smaller partial area, i.e., the display mesh information VMx composed of a plurality of the downscale display mesh information VMx each having a smaller scale rate. Specifically, the display data VM composed of the display mesh information VMx with plural scale layers respectively having different scale rates. Note that the display data VM may not have structure of the plural scale layers. The display mesh information VMx is divided into rectangular sub-areas with each side thereof having a preset length, i.e., a length reduced from the actual geographic length according to the map scale. Each certain comer of the sub-area has absolute coordinates ZP relative to entire map information, e.g., a global map.

The display mesh information VMx includes a name information VMxA such as an intersection name, a road information VMxB and a background information VMxC. The name information VMxA has a table structure for data that displays a text information, such as an intersection name and a regional name in the certain area, on a predetermined position according to the positional relationship with the absolute coordinates ZP. The road information VMxB has a table structure for data that displays a road in this area on a predetermined position according to the positional relationship with the absolute coordinates ZP. The background information VMxC has a table structure for data that displays a symbol or an image information representing a famous place or a building on a predetermined position according to the positional relationship with the absolute coordinates ZP.

On the other hand, the matching data MM shown in Fig. 5 is used for a map matching processing for correcting the position of a vehicle on the screen to be located on a road, so as to avoid displaying error that the vehicle is displayed on a building instead of the road, when the traveling state of the vehicle is overlaid on the map information on the screen. The matching data MM, just like the display data VM, is divided into the plurality of matching mesh information MMx each of which associates with a partial area with its unique number, the plurality of matching mesh information MMx continuously arranged in a matrix form. Note that the matching mesh information MMx, just like the display data VM, may have plural scale layers respectively having different scale rates. Each matching mesh information MMx has a rectangular sub-area with each side thereof having a preset length, i.e., a length reduced from the actual geographic length according to the map scale. Each certain comer of the sub-area has absolute coordinates ZP relative to entire map information, e.g., a global map. Note that the matching mesh information MMx may have a data structure that represents a sub-area different from the one represented by the display mesh information VMx, that is, the scale of the sub-area of the matching mesh information MMx may be different from that of the display mesh information VMx. If a same scale is used, a unique number information may be used for associating the data. If a different scale is used, the absolute coordinates may be used for associating the data.

The matching data MM has a plurality of linked-line block information. The linked-line block information has a table structure for data in which a plurality of links L, each of which is a segment information connecting nodes N (shown as dots in Fig. 5) as the point information for constituting roads and representing points, are mutually associated according to a predetermined regularity. Each link L has a unique segment information (hereafter referred to as a link ID) as a unique number and a node information as a unique number indicating the two nodes N connected by the link L.

Each node N may represent a knotting point such as an intersection of roads, a turning point, a branching point or a joining point. Information on the node N includes a unique point information that is a unique number assigned to each node N in the linked-line block information, a coordinate information representing the position where each node N is located, and a branching information telling whether the node N represents an intersection or a branching point where a plurality of links L cross or not.

On the other hand, the map data for travel route search, just like the matching data, has a table structure including a point information for representing the points such as the nodes N for representing a road and a segment information for connecting the points such as the link L, that is, the table structure means an information structure that represents a road for searching a travel route.

The storage 540, for instance, stores the retrieval information for acquiring information of a certain point in the map information. The retrieval information provided against to the search request from the terminal unit 400 includes various information such as contents and guidance for names of a state, a city, a region and a point and various information on a shop as a point, the area of which are sequentially divided on the map information. The retrieval information has a table structure in a layered tree structure where each of item information is associated with one of the layer.

Further, the storage 540 stores a personal information for the user who uses the navigation system 100 via the terminal unit 400. The personal information includes one's name and address, an ID number assigned to each user, and a password, the personal information associated with a model of the terminal unit 400 for the navigation system 100 and a unique terminal information such as an Internet address number and a line number for transmitting/receiving information to/from the terminal unit 400. Furthermore, the storage 540 stores various information that is used for performing the navigation processing in a manner readable by the CPU 550.

According to various programs stored in the storage 540, the CPU 550 has a map output section 551 that works as an error area computer and a map information processor corresponding to the position information acquiring section and the accuracy information acquiring section, a route processor 552 as a search section, and a retriever 553.

Based on the input processing server signal Sc, when acquiring information for requesting distribution of information on the map information indicated in the processing server signal Sc, the map output section 551 retrieves the information requested, such as the display data VM and the matching data MM corresponding to a certain area, from the map information stored in the storage 540, and reads the information as a memory signal Sm. The map output section 551 appropriately converts the read memory signal Sm into the processing server signal Sc, outputs the processing server signal Sc to one or all of the target terminal units 400 via the interface 510 and the network 200, and distributes the requested information out of the map information.

In other words, the map output section 551 acquires the position information, the accuracy information and the unique terminal information, each transmitted from the terminal unit 400. The map output section 551 selects a scale rate of the display data VM of the map information associated with a level information stored in the storage 540 based on the accuracy information. For example as shown in Figs. 6A to 6C, when the positioning accuracy is the level 3 (high accuracy) as the level information of the accuracy information, the map output section 551 selects the most detailed scale rate for the display mesh information VMx to cover a narrow and relatively detailed area as shown in Fig. 6A; when the positioning accuracy is the level 2 (medium accuracy), it selects the medium scale rate for the display mesh information VMx to cover a moderately detailed area as shown in Fig. 6B; and when the positioning accuracy is the level 1 (low accuracy), it selects the least detailed scale rate for the display mesh information VMx to cover a wide and relatively rough area as shown in Fig. 6A.

The map output section 551, based on the accuracy information, further selects an error radius (an error value) associated with the level information stored in the storage 540 and calculates an error area including the current position of the terminal unit 400. Note that the error area is, for instance, calculated as a circular area. In such instance, the error area, where the terminal unit 400 may be located, is defined as the inside of a circular area RA, the diameter of which is obtained when the error radius is multiplied by "2", the center of the circular area RA being the latitude and longitude information of the position information. The map output section 551 further calculates a reference value obtained when the diameter of the circular area RA is multiplied by a predetermined constant (described below) so that the error area is displayed at the display area on the terminal display 440 of the terminal unit 400.

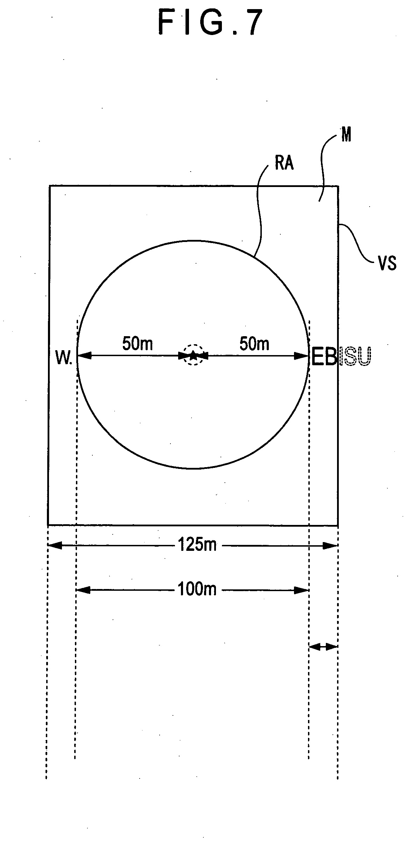

The map output section 551, based on the unique terminal information sent from the terminal unit 400, recognizes the size of the display area for displaying a map on the terminal display 440. The map output section 551 calculates the map scale so that the reference value of the error area becomes the minimum dimension of the display area, for instance as shown in Fig. 7, a horizontal dimension of the display area VS, reads the map appropriate to the display area VS by cutting the corresponding area from the display data VM based on the vertical dimension of the display area VS so that the circular error area is located at the center, and generates a map information M so as to transmit it to the terminal unit 400. The map output section 551 transmits the generated map information M to the target terminal unit 400 corresponding to its unique terminal information.

When the error area is multiplied by the constant, the current position of the terminal unit 400 is intended to actually locate within the circular area RA, however, if the map information to be displayed at the display area VS is generated based on the diameter of the circular area RA, the terminal unit 400 may be located on the outer circumference of the circular area RA in fact. The map, therefore, may be displayed with the half of the current position and its periphery being lost. As shown in Fig. 7, the map output section 551 calculate an enlarged error area slightly larger than the initial one, the enlarged error area obtained when the diameter of the circular area RA is multiplied by a predetermined constant. By multiplying by the constant, even when the terminal unit 400 is located on the outer circumference of the circular area RA, the position thereof and its periphery are displayed within the enlarged error area, thereby reliably providing the current position to the user. The constant is applied to a range for displaying approximately 60% or more of one character of the text information that represents a name and a direction of the ground object information outside the circular area RA but within the enlarged error area, so as to be recognizable by the user, more preferably, the constant is applied to a value for displaying a whole character.

As shown in Table 1, when assuming that a number of pixels is "a" in a direction of the short dimension of the display area VS, and a number of characters to be displayed is "b" in the direction of the short dimension, a map with a scale area corresponding to a scale dimension where the diameter of the circular area RA is (100 - (1/b*2*100))% or more relative to the minimum dimension of the display area, is displayed at the display area VS. That is, the horizontal dimension of the display area VS may be a value where the diameter of the circular area RA is multiplied by a predetermined constant that is a reciprocal number of the percentage obtained by the above equation for reducing its scale.

**[Table 1]**

| | No. of Pixels = a |
|---|---|
| Size of 1 Character (chrs) | (1/No. of chrs*100)% |
| Insert 1 Chr Each on Both Sides | (1/No. of chrs*2*100)% |
| Error Area | (100-(1/No. of chrs*2*100))% |

In the case that the terminal unit 400 is a mobile phone etc., the display area VS generally displays the map with 100 to 140 pixels in the short horizontal dimension when the map is displayed on the terminal display 440. Besides, the display area VS generally displays 8 characters at the maximum font size, and 24 characters at the minimum font size, for instance, with 4 to 32 pixels in the direction of the short dimension of the display area VS with regard to visibility and an amount of information to be displayed. According to the size of the circular area RA relative to the display area VS as shown in Table 1, Tables 2 to 4 show relations to display each one character on the both outsides of the circular area RA.

**[Table 2]**

| Maximum Font (for 1 Chr) | | In the Case of 120 Pixels | | |
|---|---|---|---|---|
| Size For Displaying 8 Chrs | 1/8*100=12.5% | 14 to 16 pixels | 14/120*100=11.6% 16/120*100=13.3% | 12% to 13% |
| Insert 1 Chr Each on Both Sides | 12.5%*2=25% | 28 to 32 pixels | | 23% to 27% |
| Error Area | 100%-25%=75% | | 100%-23%=77% 100%-27%=73% | 77% to 73% |

**[Table 3]**

| Minimum Font (for 1 Chr) | | In the Case of 120 Pixels | | |
|---|---|---|---|---|
| Size For Displaying 24 Chrs | 1/24*100=4.16% | 4 to 6 pixels | 4/120*100=3.3% 6/120*100=5% | 3% to 5% |
| Insert 1 Chr Each on Both Sides | 2/24*100=8.33% | 8 to 12 pixels | 8/120*100=6.6% 12/120*100=10% | 6% to 10% |
| Error Area | 100%-8.3%=91.7% | | 100%-6.6%=93.4% 100%-10%=90% | 93% to 90% |

**[Table 4]**

| Minimum Font (for 60 % of 1 Chr) | | In the Case of 120 Pixels | | |
|---|---|---|---|---|
| Size For Displaying 24 Chrs | 1/24*0.6*100=2.49% | 4 to 6 pixels | 4/120*0.6*100=1.99% 6/120*0.6*100=3% | 2% to 3% |
| Insert 1 Chr Each on Both Sides | 2/24*0.6*100=4.9% | 8 to 12 pixels | 8/120*0.6*100=3.99% 12/120*0.6*100=6% | 4% to 6% |
| Error Area | 100%-5%=95% | | 100%-2%=98% 100%-6%=94% | 98% to 94% |

As shown in Tables 2 to 4, when the font size is a maximum size that is capable of displaying 8 characters, one character accounts for 12.5% of the display area VS in the direction of the short dimension. On the other hand, when the font size is a minimum size that is capable of displaying 24 characters, one character accounts for approximately 4.2%. Note that, when 60% of one character is displayed at the minimum font size, it accounts for approximately 2.5%. Accordingly, the ratio of the diameter of the circular area RA to be the error area relative to the horizontal dimension of the display area VS is 75% at the maximum font size, 91.7% at the minimum font size, and 95% at the minimum font size with 60% of one character being displayed. As shown in Tables 2 to 4, in the case of 120 pixels as common value in the horizontal dimension of the display area VS, the above ratio needs to be 73% to 98%, more preferably, 73% to 93% so that the whole character is displayed, when considering the number of the pixels with regard to the visibility and the information amount. The constant multiplying the diameter of the circular area RA, therefore, need to be 1.02 to 1.37, more preferably, 1.08 to 1.37, as the reciprocal number of the percentage 73% to 98%. With the above calculation, the scale dimension of the map information M to be displayed at the display area VS is obtained to generate the map information M to be displayed.

Based on the processing server signal Sc, when acquiring information for requesting a route search indicated in the processing server signal Sc, the route processor 552 calculates and searches for the travel route with use of the map information stored in the storage 540, and generates the memory signal Sm. The route processor 552 appropriately converts the generated memory signal Sm into the processing server signal Sc, outputs the processing server signal Sc to the target terminal unit 400 via the interface 510 and the network 200, and provides the travel route.

Specifically, the route processor 552 acquires the position information, the destination information on the destination and the configuration information that sets the travel route etc transmitted from the terminal unit 400. The route processor 552 uses the map data for travel route search of the map information, retrieves for the unique terminal information included in the configuration information, in the case of the in-vehicle navigation device, searches for a travelable road, sets a route such as the one with a short time required, the one with a short travel route, or the one avoiding traffic jam and traffic regulation, and generates a route guidance information as the memory signal Sm. Note that when searching for the travel route, the route processor 552 may use the matching data MM in the map information other than the map data for travel route search. The travel route information includes, for example, the route guidance information for assisting the drive with navigation during the drive of the vehicle. The route guidance information is appropriately displayed or output in voice form at the terminal unit 400 for assisting the drive.

Based on the input processing server signal Sc, when acquiring information for requesting retrieval of the retrieval information indicated in the processing server signal Sc, the retriever 553 hierarchically retrieves the retrieval information stored in the storage 540 according to, e.g., the item information and reads it as the memory signal Sm. The retriever 553 appropriately converts the read memory signal Sm into the processing server signal Sc, outputs the processing server signal Sc to the target terminal unit 400 via the interface 510 and the network 200, and distributes the retrieval information.

According to the signal Sin input by the input operation with the input section 520, the CPU 550 appropriately calculates with the contents corresponding to the input operation, and appropriately generates a signal Sdp etc. Then the CPU 550 appropriately outputs the generated various signals to the display 530, the interface 510 and the storage 540 and operates them so as to execute the input contents.

### [Operation of Navigation System]

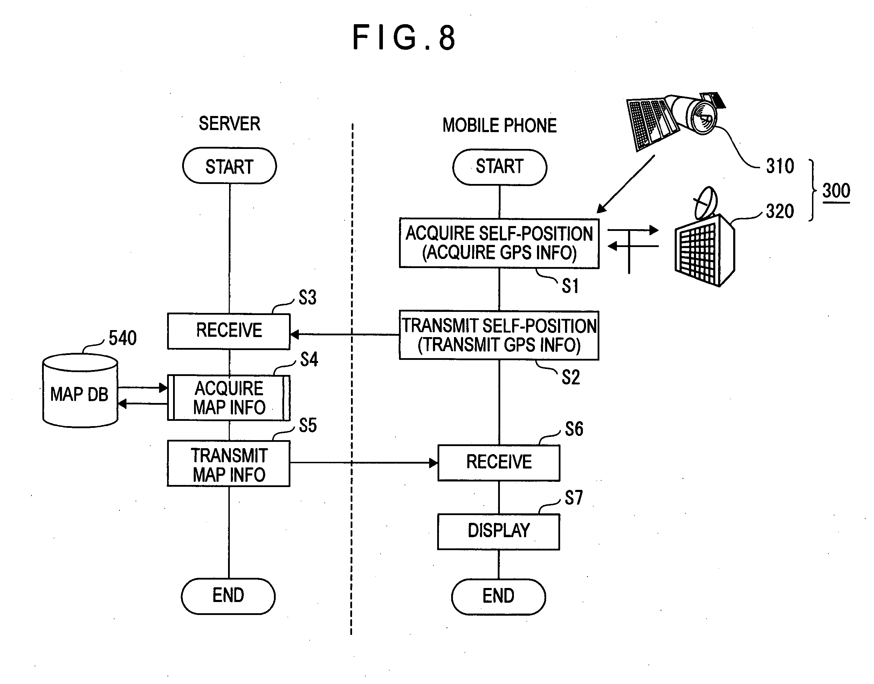

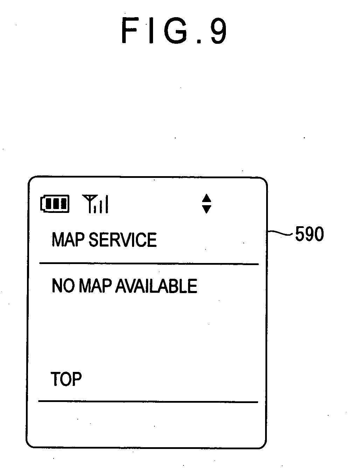

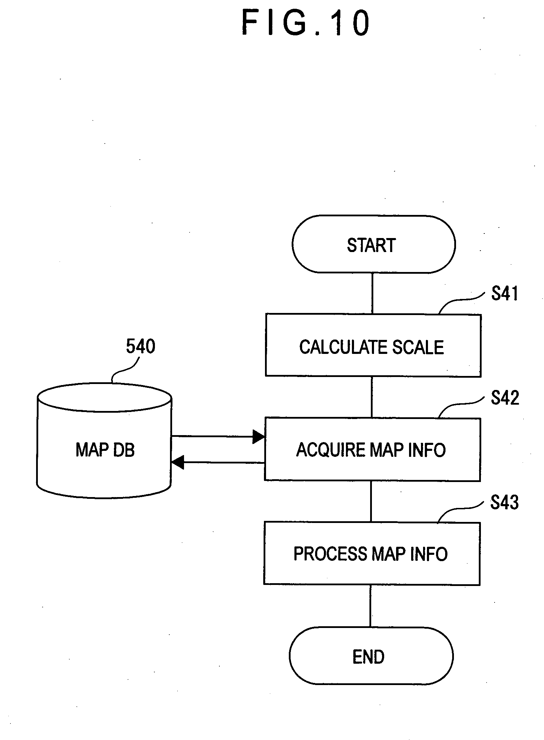

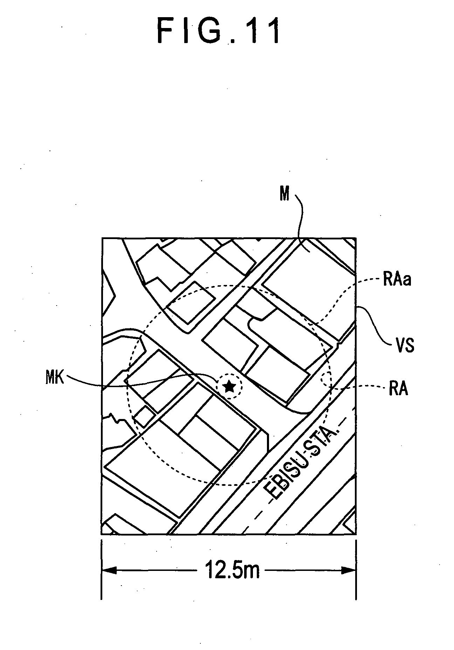

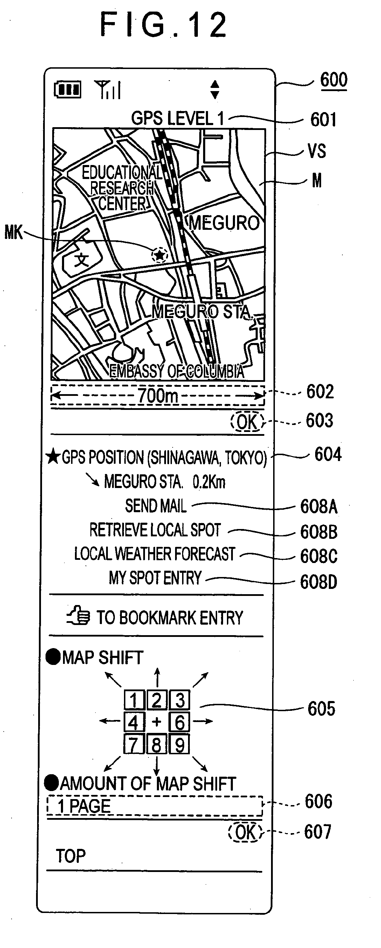

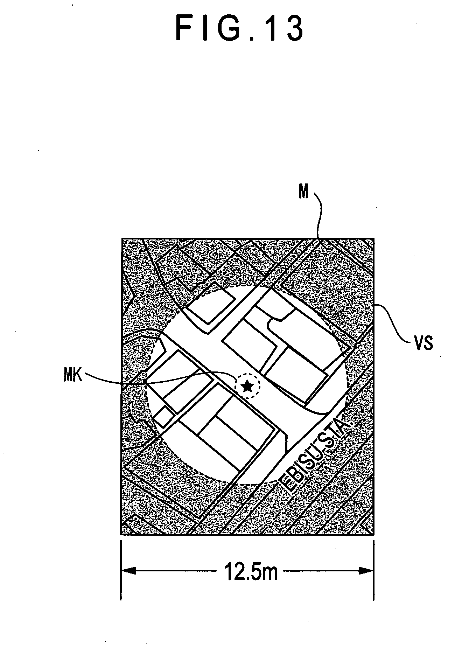

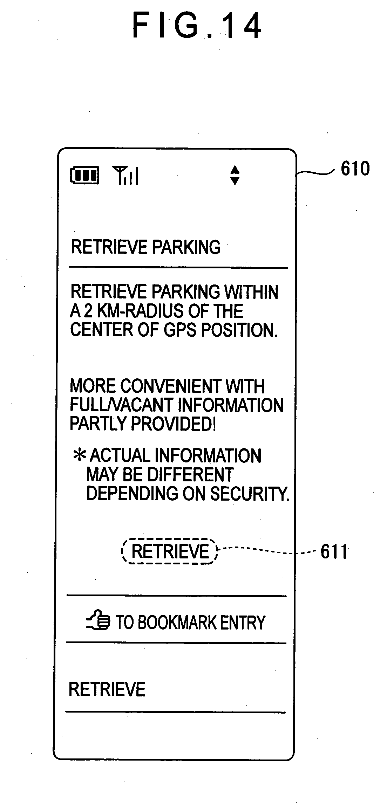

The operation of the navigation system 100 will be described below in reference to the drawings. Though the operation is described below with a mobile phone as the terminal unit 400, the terminal unit 400 may be applied to any arrangements described above, and similar operation is available by using various forms operated with the above arrangements. Fig. 8 is a flowchart showing operation for displaying the current position of the terminal unit of the navigation system. Fig. 9 is a conceptual diagram showing a screen-displayed form to indicate that a map cannot be displayed. Fig. 10 is a flowchart showing operation for acquiring the map information. Fig. 11 is a conceptual diagram showing the map information to be displayed at the display area. Fig. 12 is a conceptual diagram showing a screen-displayed form for displaying the map information. Fig. 13 is a conceptual diagram showing the map information to be displayed at the display area when a display mode is switched. Fig. 14 is a conceptual diagram showing a screen display for a retrieval execution form to retrieve information on parking.

A user performs a certain input operation with the terminal input section 430. When recognizing the certain input operation, the processor 470 operates the terminal display 440 to display a menu screen with a predetermined form (not shown) stored in the memory 460. A plurality of command buttons (not shown) is provided on the menu screen. The command buttons can be selected and determined by the input operation with the terminal input section 430. According to the input operation with the respective command buttons, a predetermined form stored in the memory 460 is appropriately displayed on the terminal display 440. One of the command buttons is provided for positioning the current position to provide, or display the current position of the terminal unit 400.

When the command button for positioning the current position is selected and determined, the processor 470 of the terminal unit 400 acquires information on the current position as the self-position as shown in Fig. 8 (step S1). In other words, the processor 470 operates the sensor section 420 to acquire navigation electric wave from the GPS satellite 310, further operates the assumed coordinate information acquiring section 471 of the processor 470 to generate the assumed coordinate information, and outputs the assumed coordinate information to the position and accuracy information acquiring section 472. Further, the position and accuracy information acquiring section 472 outputs the unique terminal information as well as the acquired assumed coordinate information to the transceiver 410, and operates the transceiver 410 to transmit it to the position information processing device 320 of the position information processing system 300.

In the position information processing device 320, the position information generator 321B1 of the base computer 321 generates the position information including the latitude and longitude information on the current position of the terminal unit 400, and the accuracy information generator 321B2 recognizes the positioning accuracy of the current position to generate the accuracy information including information on the level associated with the recognized accuracy. And then, the base computer 321 operates the base transceiver 321A to transmit the position information and the accuracy information together with the connection information to the target terminal unit 400 based on the unique terminal information acquired with the assumed coordinate information. The position and accuracy information acquiring section 472 of the terminal unit 400 acquires the position information and the accuracy information transmitted from the position information processing device 320, so that the terminal unit 400 acquires information on the current position as the self-position.

In the step 1, when it is continued for several time that cannot acquire the position information and the accuracy information because navigation electric wave and line connection with the base station are unavailable, or cannot be connected with the server unit 500 since the line connection is unavailable, for several times, the position and accuracy information acquiring section 472 operates the display controller 474 to display a predetermined form. For instance, a screen-displayed form 590 as shown in Fig. 9 is displayed to indicate that the map cannot be displayed. With such indication, the user moves to another position with navigation electric wave available or another place with the line communication available, and performs the setting to display the current position according to the above operation.

After acquiring the position information and the accuracy information in the step S1, the terminal unit 400 operates the transceiver 410 based on the connection information acquired at the position and accuracy information acquiring section 472 from the position information processing device 320 together with the position information and the accuracy information, and transmits the position information and the accuracy information to the server unit 500 over the network 200 (step S2). When transmitting in the step S2, the unique terminal information is transmitted as well.

When the server unit 500 receives the position information and the accuracy information from the terminal unit 400 (step S3), the map output section 551 of the CPU 550 acquires the map information (step S4). As shown in Fig. 10, the map output section 551 calculates the scale, in other words, selects the scale rate of the display data VM based on the accuracy information, for instance, selects a layer of the display mesh information VMx as shown in Figs. 6A to 6C (step S41).

The map output section 551 acquires the map to be displayed at the terminal unit 400 (step S42). That is, the map output section 551 calculates the error area where the terminal unit 400 is located based on the accuracy information. Specifically, the map output section 551 reads the error radius corresponding to the level of the positioning accuracy from the storage 540, and recognizes the circular area RA, the diameter of which can be obtained by multiplying the error radius by "2", the center of the circular area RA being the latitude and longitude information of the position information. The constant is applied to the diameter of the circular area RA as the error area where the terminal unit 400 can be located to calculate the reference value so that the diameter of the enlarged error area to be displayed at the terminal unit 400 becomes slightly larger than the initial error area. The map output section 551, based on the unique terminal information acquired with the position information and the accuracy information, recognizes the size of the display area VS to display the map on the terminal display 440. The map output section 551 calculates the map scale so that the reference value of the error area corresponds to the short horizontal dimension of the display area VS, further calculates the scale distance in a vertical direction based on the ratio of the vertical dimension to a horizontal dimension of the display area VS, and reads the map associated with the display area VS surrounded by the calculated scale distances by cutting the corresponding area from the display mesh information VMx.

As shown in Fig. 11, the map output section 551 overlays a symbol MK such as an icon for representing the current position at the center of the read map information on the latitude and longitude of the position information, and generates the map information M to be displayed at the terminal unit 400 (step S43).

After generating the map information M by the map information acquiring processing in the step S4, the server unit 500 transmits the map information M to the target terminal unit 400 that has transmitted the position information etc., based on the unique terminal information (step S5). When the terminal unit 400 receives the map information M transmitted from the server unit 500 in the step S5 (step S6), the map information acquiring section 473 operates the display controller 474 to overlay the map onto a predetermined form, for instance, a map display form 600 as shown in Fig. 12 displayed at the display area VS on the terminal display 440 (step SS7).

There is provided the display area VS that displays the map information M transmitted from the server unit 500 on the map display form 600 to be displayed on the screen as shown in Fig. 12. There are further provided a text box 601 showing the level information of the accuracy information is displayed, a list box 602 showing the map scale of the map information M to be displayed at the display area VS, the text box 601 and the list box 602 being adjacent to the display area VS. The map scale is displayed on the list box 602 corresponding to the map information M. The list box 602 can be changed to other map scales according to the input operation with the terminal input section 430. With the input operation of a command button 603 that is adjacent to the list box 602 and determines the map scale, the map information acquiring section 473 acquires the map information corresponding to the set map scale, i.e., the display mesh information VMx, the layer of which is corresponding to the map scale, from the server unit 500.

There is provided a text box 604 showing the current position on the map display form 600 as shown in Fig. 12. The map display form 600 has an operation instruction area 605 for displaying operation contents of numeric keys associated with the operation buttons 431 of the terminal input section 430, a list box 606 for displaying how far the map is shifted with operation of the numeric keys and a command button 607 for determining the amount of shifting the map displayed at the list box 606. By the input operation of the command button 607, the map information acquiring section 473 acquires the map information M corresponding to the area, the shifting amount of which is selected at the list box 606, from the server unit 500.

The map display form 600 further includes a command button 608A for transmitting the position information via Email, a command button 608B for retrieving a shop nearby the current position or a sightseeing spot, a command button 608C for acquiring weather information around the current position, a command button 608D for storing the position information, and the like.

After displaying the map information M in the step S7, the display controller 474 displays the error area through the input operation with the command button (not shown) by, for instance, overlaying a circle RAa onto the map for representing the range of the error area that is a circular area RA, where the current position may be located, as shown in Fig. 11, or darkening the part outside the error area. Note that other arrangements are available for displaying of the error area, for instance, the server unit 500 may transmit only such map information M at the initial state, or the map information M with the preprocessed map information M as shown in Fig. 11 or 13, when transmitting to the terminal unit 400, so that the command button (not shown) can switch the display of these maps. Further, the terminal unit 400 may not display the indication of the error area at all.

After displaying the map information M in the step S7, for instance, when the command button 608B as shown in Fig. 12 is input, or a predetermined command button on the menu screen is input, the display controller 474 displays a predetermined local retrieval form stored in the memory 460 on the terminal display 440. Various criteria etc. is set by the input operation with the terminal input section 430 according to the form, for instance, and by the input operation of a command button 611 for promoting execution of retrieval according to a retrieval execution form 610 displayed on the screen display as shown in Fig. 14, the information retriever 475 transmits the position information and the unique terminal information as well as the contents set in the form to the server unit 500. Fig. 14 is a screen display of a retrieval execution form for retrieving information on parking. The server unit 500 retrieves a shop nearby, a sightseeing spot or the like based on the map information, and transmits it to the terminal unit 400 to display it.

According to the above-described embodiment, the position information processing system 300 positions and generates the position information on the current position of the terminal unit 400 and the accuracy information on the positioning accuracy. The map output section 551 of the server unit 500 acquires the position information and the accuracy information via the terminal unit 400 to calculate the error area of the current position based on the position information and the accuracy information. The map output section 551, from the storage 540, acquires the map information M with the scale area where the maximum dimension of the error area corresponds to the minimum dimension of the display area VS, the error area calculated based on the display area information on the display area VS for displaying the map on the terminal display 440 of the terminal unit 400. The map information M, therefore, can be displayed in detail without lacking a part of the error area currently located. The current position can be easily determined based on the map information M, thereby appropriately displaying the current position on the map.

The map output section 551 reads the map information M with the scale area corresponding to the scale dimension where the diameter of the error area, that is the maximum dimension thereof, corresponds to 80% or more of the horizontal dimension of the display area VS, that is the minimum dimension thereof, from the storage 540. Even when the current position is located on the outer circumference (the maximum dimension) of the error area, the current position and its periphery is displayed, thereby securely determining the current position based on the map information M to be displayed.

There is provided information with plural levels corresponding to the positioning accuracy as the accuracy information on the positioning accuracy. The positioning accuracy, therefore, can be represented with numeric values so that the area setting of the map information M based on the positioning accuracy can be easily performed.

As the area setting of the map information M based on the positioning accuracy, the map output section 551 selects the scale layer of the display mesh information VMx, the scale rate of which corresponds to the level information of the accuracy information, then reads the appropriate area corresponding to the error area from the display mesh information VMx of the selected layer, with regard to the dimension of the display area VS and acquires the map information M. The scale rate for the map information, therefore, can be set according to simple data structure that makes the level information associate with the layers of the map information, thereby easily acquiring the proper map information M.

The map information 551 calculates the circular area RA around the current position, as the error area. The error area currently located can be easily calculated based on the position information, thereby shortening the time between the input operation for positioning and the display of the map information M, and promoting wide usage upon the improvement of usability.

The map output section 551 reads the error radius of the error information corresponding to the positioning accuracy of the accuracy information from the storage 540, and calculates the circular area RA with the read error radius where the current position based on the position information is located at the center, as the circular error area. The error area, therefore, can be easily calculated according to simple data structure that makes the accuracy information associate with the error radius of the error information, thereby easily reading the map information M corresponding to the display area VS based on the error area, shortening the time till completion of displaying the map information M, and promoting wide usage upon the improvement of usability.

The map output section 551 acquires the area, where the circular area RA is multiplied by the predetermined constant, as the enlarged error area. For instance, since the error area is multiplied by the constant so as to obtain the enlarged error area, even when the map information M corresponding to the display area VS based on the enlarged error area, the current position located on the outer circumference of the circular area RA can be displayed without lacking a part of the periphery of the current position, thereby securely determining the current position based on the map information M to be displayed.

The map output section 551 calculates the diameter of the circular area RA based on the error radius, and further calculates the maximum dimension of the enlarged error area which becomes the reference to read the map information M corresponding to the display area VS while the diameter of the circular area RA is multiplied by the constant. The area of the map information M, therefore, can be easily set, thereby shortening the time till completion of displaying the map information M, and promoting wide usage upon the improvement of usability.

With the above calculation, the constant is 1 to 1.32 so that the map is displayed in detail without lacking of a part of the circular area RA currently located as the error area. The map information M, therefore, is displayed in the most detail with the constant 1, and displayed on the area covering the periphery of the current position even when the current position is located on the outer circumference of the circular area RA, with the constant 1.02 to 1.37, thereby preferably displaying the current position with simple structure according to multiplication by the simple numeric values. Especially since the constant is set up to 1.37, one character is entirely displayed outside the circular area RA but within the enlarged error area, thereby recognizing the name information etc. and preferably determining the current position without losing its detail.

The display area VS for displaying the map information M is a rectangular area, thereby easily reading the map information M corresponding to the display area VS based on the horizontal dimension (the minimum dimension). In other words, the area of the map information M read based on the vertical dimension relative to the horizontal dimension can be recognized, thereby easily acquiring the map information M, shortening the time till completion of displaying the map information M, and promoting wide usage upon the improvement of usability. In the case that the display area VS is limited for a mobile phone etc., the map information M can be easily and maximally displayed on the limited screen display without margin by setting the display area VS to fill the entire terminal display 440, thereby preferably displaying the map.

The map information M to be displayed at the display area VS includes the symbol MK for the current position overlaid on the map information. The terminal unit 400, therefore, only needs to display the map, so that the processing load that displays the map information M including the symbol MK for the current position can be reduced at the terminal unit 400 especially for a mobile phone etc. requested to be downsized, thereby effectively saving the limited processing ability of the terminal unit 400. With this arrangement, since the map information M that is unnecessary to preprocess for overlaying the symbol MK is transmitted to the terminal unit 400, widely used HTML (Hyper text Mark-up Language) format can be used for the map information M, so that various methods can be used for transmitting/receiving the map information M over the network 200, and the navigation system 100 and a control program etc. can be easily constructed, thereby promoting wide usage.

The terminal unit 400 acquires navigation electric wave from the GPS satellite 310, instructs the position information processing device 320 of the base station to generate the position information and the accuracy information of the terminal unit 400, and acquires the position information and the accuracy information to transfer them to the server unit 500. The terminal unit 400, therefore, is not necessary to generate the position information and the accuracy information, thereby reducing the processing load and effectively saving the limited processing ability of the terminal unit 400.

There are provided the command buttons 608B and 608C etc. as shown on the map display form 600 in Fig. 12 so that information can be retrieved for local spot, weather forecast and the like, thereby effectively using the acquired position information and further improving its convenience.

The management of the map information is centralized at the server unit 500. With this arrangement, when a part of the map information is changed, it is only need to change the map information stored in the storage 540 of the server unit 500. Since the system is so configured that the updated map information is distributed to the terminal units 400 over the network 200, all of the terminal units 400 can display the current position on the map based on the updated map information, thereby easily managing its operation.

Since the matching data MM is provided with this arrangement as the map information, route search and guidance in transit can be performed at the terminal unit 400 in the case that the terminal unit 400 is a navigation device etc., thereby further improving its convenience.

Further, the storage 540, the route processor 552 for executing retrieval based on the position information, i.e., local retrieval and route search, and the retriever 553 constitute one server unit 500. Therefore, for instance, searching with use of the map information can be smoothly performed, for easily shortening the retrieval time. Though described above, the server unit 500 may not perform any retrievals.

### [Modification of Embodiment]

The present invention is not limited to the above specific embodiment, but includes modifications and improvements as long as the objects of the present invention can be attained.

The described navigation system 100 is so configured that information is appropriately transmitted/received among the terminal unit 400, the position information processing system 300 and the server unit 500 over the network 200, and the terminal display 440 of the terminal unit 400 acquires the map information M, however, it is not limited. Any combinations are available. For instance, one device can conduct generation of the position information and the accuracy information at the position information processing system 300 and acquisition of the map information M at the server unit 500, or two different devices can acquire either one of the position information and the accuracy information.

The position information is not limited to use navigation electric wave, and any methods are available. For instance, the current position can be recognized based on the distance from plural base stations. Further, the accuracy information is not limited to be represented with the level, and any methods are available.

The map information has layered structure, and the scale rate is set by selecting one of the layers corresponding to the level of the positioning accuracy according to the above embodiment. Following processing is also available in which the scale rate of one map information can be changed corresponding to the positioning accuracy and read the map information M by cutting it based on the map information changed with the scale rate. Namely, it is not limited to the above data structure as the arrangement of the map information stored in the storage 540.

The error area is not limited to circle, and any shape is available. If the error area includes a forbidden area, the area excluding the forbidden area can be set as the error area.

The constant is not limited to the range between 1.02 and 1.37. For instance, a constant that can obtain an area for one character can be employed.

The display area VS is described as rectangular, however, an area with any shape can display the map information M. For instance, the display area VS may be a circle corresponding to the circular error area.

Information can be retrieved with this embodiment, and any contents can be retrieved such as route search. On the other hand, the retrieval arrangement may not be provided at all.

The arrangement for executing the respective processing is constructed as program, however, it can be constructed with a hardware such as a circuit board or an element such as one IC (Integrated Circuit). Note that the arrangement in which the processing order is read from a program or a recording medium, can be easily handled, thereby promoting wide usage. The computer according to the present invention is a single personal computer, however, may include a combination of a plurality of computers that are connected over a network, an element such as a CPU or a microcomputer, or a circuit board on which a plurality of electronic parts are mounted.

The arrangement and the operating procedures for implementing the above embodiment may be appropriately modified as long as the scope of the present invention can be attained.

### [Advantage of Embodiment]

As described above, the embodiment enables to acquire the position information on the current position information generated by positioning and the accuracy information on the positioning accuracy of the current position, calculate the error area of the current position based on the position information and the accuracy information, and acquire the map information M with the scale area where the maximum dimension of the error area corresponds to the minimum dimension of the display area VS. The error area currently located, therefore, can be displayed without lacking of a part thereof, thereby easily determining the current position based on the displayed map information M and appropriately displaying the current position on the map.

## Claims

1. A map information processing device for processing a map information on a map displayed on a display to provide a current position overlaid on the map, the device comprising:
a storage for storing the map information;
a position information acquiring section for acquiring a position information on the current position generated by positioning;
an accuracy information acquiring section for acquiring an accuracy information on a positioning accuracy of the current position;
a display area information acquiring section for acquiring a display area information on a display area in which the map is displayed on the display;
an error area computer for calculating an error area of the current position based on the position information and the accuracy information; and
a map information processor for acquiring the map information with a scale area where the maximum dimension of the error area corresponds to the minimum dimension of the display area from the storage.

2. The map information processing device according to claim 1, wherein the map information processor acquires the map information with the scale area corresponding to a scale dimension where the maximum dimension with the error area is (100 - (1/b*2*100))% or more relative to the minimum dimension of the display area from the storage, when a number of pixels is "a" and a number of characters is "b" in a direction of a short dimension of the display area.

3. The map information processing device according to claim 2, wherein the maximum dimension of the error area is 73% or more relative to the minimum dimension of the display area.

4. The map information processing device according to any one of claims 1 to 3, wherein the accuracy information is associated with a plurality of levels corresponding to the positioning accuracy.

5. The map information processing device according to claim 4,
wherein the storage stores the plurality of map information respectively having different map scales, and
wherein the map information processor selects the map information with a scale rate corresponding to the level of the accuracy information and acquires an area corresponding to the error area in the map information as a map information to be displayed at the display area.

6. The map information processing device according to any one of claims 1 to 5, wherein the error area computer calculates a circular area around the current position as the error area.

7. The map information processing device according to claim 6,
wherein the storage stores an error information on an error radius corresponding to the positioning accuracy of the accuracy information, and
wherein the error area computer calculates the circular area around the current position based on the error information corresponding to the accuracy information to recognize the error area.

8. The map information processing device according to claim 6 or 7, wherein the error area computer acquires an area, where the circular area is multiplied by a predetermined constant, as an enlarged error area.

9. The map information processing device according to claim 7, wherein the error area computer calculates the diameter of the circular area based on the error radius, the maximum dimension of the error area being calculated by multiplying the diameter thereof by the constant.

10. The map information processing device according to claim 8 or 9, wherein the constant is between 1.02 and 1.37.

11. The map information processing device according to claim 6 or 7,
wherein the map information includes a text information indicating a ground object,
wherein the storage stores the error information on the error radius corresponding to the positioning accuracy of the accuracy information, and
wherein the error area computer calculates the circular area around the current position based on the error information relative to the accuracy information, and updates the error area as an enlarged error area, by adding an area for recognizably displaying one character of the text information outside the circular area.

12. The map information processing device according to any one of claims 1 to 11, wherein the display area of the display area information is rectangular.

13. The map information processing device according to any one of claims 1 to 12, wherein the map information processor acquires information that includes the current position overlaid on the map of the map information acquired from the storage based on the position information as a map information to be displayed on the display.

14. A position information display device, comprising:
a display for displaying a map;
a display controller for displaying the map at a predetermined display area on the display;
a position information acquiring section for acquiring a position information on a current position generated by a positioning section that locates the current position;
an accuracy information acquiring section for acquiring an accuracy information on a positioning accuracy generated by the positioning section; and
a map information acquisition request section for outputting a request to calculate an error area of the current position based on the position information and the accuracy information, to read a map information on a map with a scale area where the maximum dimension of the error area corresponds to the minimum dimension of the display area by a device that stores the map information, and to acquire the map information in a manner capable of being displayed by the display controller.

15. A map information processing system, comprising:
the map information processing device according to any one of claims 1 to 13; and
a terminal unit connected with the map information processing device in a manner capable of transmitting/receiving information, the terminal unit including the display for displaying the map information acquired by the map information processing device.

16. A map information processing system, comprising:
the position information display device according to claim 14; and
the map information processing device according to any one of claims 1 to 13, the map information processing device being connected with the map information display device in a manner capable of transmitting/receiving information, acquiring the map information based on the request output from the position information display device, and storing the map information to be outputted to the map information to the position information display device.

17. A map information processing system for displaying a current position of a terminal unit that is overlaid on a map on a display of the terminal unit, the terminal unit being connected with a server unit that stores a map information on the map in a manner capable of transmitting/receiving information,
wherein the terminal unit acquires a position information on the current position generated by positioning and an accuracy information on a positioning accuracy of the current position and transmits the position information and accuracy information to the server unit, and
wherein the server unit calculates an error area of the current position based on the position information and the accuracy information transmitted from the terminal unit, acquires the map information with a scale area where the maximum dimension of the error area corresponds to the minimum dimension of a display area for displaying the map on the display of the terminal unit, and transmits the map information to the terminal unit.

18. A map information processing method, by a computer, for processing a map information on a map displayed on a display to provide guidance for a current position overlaid on the map, the method comprising the steps of:
calculating an error area of the current position based on a position information on the current position and an accuracy information on a positioning accuracy of the current position; and
acquiring the map information with a scale rate where the maximum dimension of the error are corresponds to the minimum dimension of a display area for displaying the map on the display, from a storage that stores the map information.

19. A map information processing method, by a computer, for displaying a map where a current position of a terminal display unit overlaid on the map on a display of a terminal unit connected with a server unit that stores a map information on the map in a manner capable of transmitting/receiving information, the method comprising the steps of:
at the terminal unit, acquiring a position information on the current position generated by positioning and an accuracy information on a positioning accuracy of the current position and transmitting the position information and the accuracy information to the server unit;
at the server unit, calculating an error area of the current position based on the position information and the accuracy information transmitted from the terminal unit; and
at the server unit, acquiring the map information with a scale area where the maximum dimension of the error area corresponds to the minimum dimension of a display area for displaying the map on a display of the terminal unit and transmitting the map information to the terminal unit so as to display on the display.

20. A position information display method, by a computer, for displaying a map to provide a current position overlaid on the map, the method comprising the steps of:
acquiring a position information and an accuracy information on the current position generated by a positioning section that positions the current position;
outputting the position information and the accuracy information;
calculating an error area of the current position based on the position information and the accuracy information; and
reading and acquiring a map information on a map with a scale area where the maximum dimension of the error area corresponds to the minimum dimension of a display area for displaying the map on the display at a device that stores a map information in a manner capable of displaying the map information on the display.

21. A map information processing program executing the map information processing method according to claim 18 or 19 by the computer.

22. A position information display program executing the position information display method according to claim 20 by the computer.

23. A recording medium storing the map information processing program according to claim 21 in a manner readable by the computer.

24. A recording medium storing the position information display program according to claim 22 in a manner readable by the computer.
